# EUROPEAN PATENT APPLICATION

(11) **EP 0 550 041 A1**
(43) Date of publication of application: **07.07.1993**
(21) Application number: 92122044.8
(22) Date of filing: 28.12.1992
(51) Int. Cl.: B23K 26/10

(54) **A high-speed laser machine tool**

(30) Priority: 30.12.1991 IT TO911053
(71) Applicant: PRIMA INDUSTRIE S.p.A., I-10121 Torino (IT)
(72) Inventor: Sartorio, Franco, I-10129 Torino (IT)
(74) Representative: Saconney, Piero

(57) **Abstract**

A laser machine tool includes a base structure (2) carrying a first horizontal guide (6) on which a carriage (8) is slidable, the carriage (8) carrying a beam (10) which has a second horizontal guide (12) perpendicular to the first (6). A laser focusing head (16) is movable along the second guide (12) and can be made to travel along a vertical axis (Z) by at least one drive member. At least one of the drive members which brings about the vertical travel of the head (16) is independent of the movement of the head (16) along the beam (10).

## Description

The present invention relates to a laser machine tool for cutting or welding sheet metal or the like.

More precisely, the invention relates to a machine tool with a cartesian structure, of the type including a base structure carrying a first horizontal guide on which a carriage is slidable, the carriage carrying a beam which has a second horizontal guide perpendicular to the first, in which a laser focusing head, oriented vertically downwardly, is movable along the second guide and can be made to travel along a vertical axis by at least one drive member.

In laser machines, the cutting speed is limited essentially by two factors:
- in the case of long, approximately straight cuts, there is a technological limit due to the speed at which the laser beam can cut a metal sheet, the limit depending on technological details such as the power of the laser generator, the physical characteristics and the thickness of the material cut, the type and pressure of the auxiliary cutting gases, etc.,
- in the case of small holes or paths with small radii of curvature where it is necessary rapidly to execute a circular relative movement between the operating head and the sheet metal, the limit is established by the relative acceleration between the operating head and the sheet metal, since this limit is often below the technological limit described above.

When holes are formed by the movement of the laser head relative to the piece, the maximum speed is limited by the maximum centrifugal acceleration which can be imparted to the moving parts of the laser machine tool. Given a certain motive power, the maximum acceleration, and hence the cutting speed on curved paths, is inversely proportional to the mass of the moving parts and, in particular, to the mass of the parts which are fixed to the focusing head.

The mass of the focusing head and of the parts fixed thereto has an inversely proportional effect both on the maximum acceleration which can be achieved by the head along the beam with a given drive system, and on the maximum acceleration which can be achieved by the beam for a given deformation thereof.

The object of the present invention is to provide a laser machine tool which has a lighter focusing head and can achieve greater acceleration than known machines.

According to the present invention, this object is achieved by virtue of the fact that at least one of the drive members which bring about the vertical travel of the head is independent of the movement of the head along the beam.

In a preferred embodiment of the present invention, the vertical movement of the focusing head is broken down into a general positioning movement of the head brought about by a member which is independent of the focusing head, since the whole beam moves vertically, and a rapid fine adjustment movement of the focusing head relative to the beam, brought about by a second drive member associated with the head. The maximum range of the fine adjustment movement is considerably less than the maximum range of the general positioning movement.

The drive member which brings about the fine adjustment movement can therefore be very simple and light, given that it causes travel with a maximum range of the order of a few millimeters.

Further characteristics and advantages of the present invention will become clear in the course of the detailed description which follows with reference to the appended drawings, provided purely by way of non-limiting example, in which:
Figure 1 is a schematic front elevational view of a machine tool according to the invention, and
Figures 2 and 3 are schematic views taken on the arrows II and III of Figure 1.

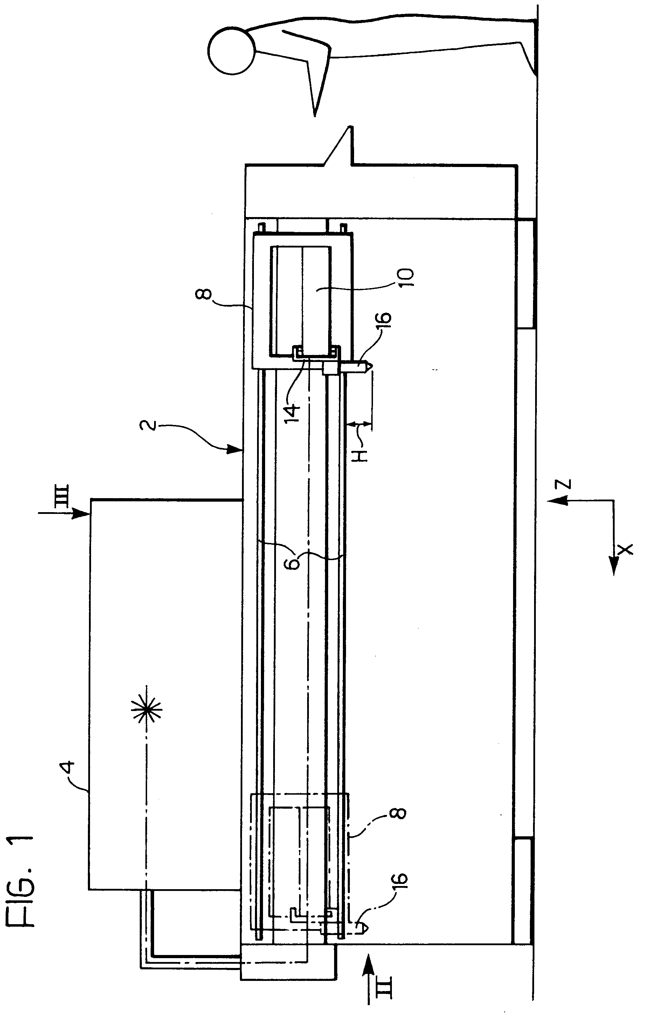

With reference to Figures 1 to 3, a laser machine tool includes a base structure 2 on which a laser generator 4 is disposed.

The structure 2 has a horizontal guide 6, which extends along the axis X, on which a carriage 8 is slidable, the carriage 8 being moved along the guides 6 by conventional means. The carriage 8 carries a cantilevered beam 10 with a guide 12 along which a carriage 14 carrying a laser focusing head 16 is slidable.

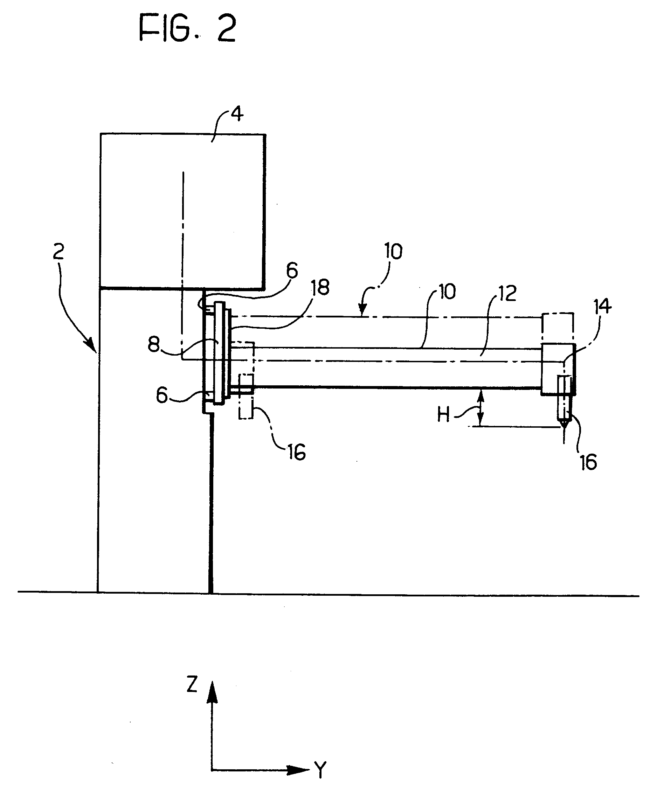

Between the carriage 8 and the beam 10 is a vertical guide 18 (figure 2) along which the beam 10 can slide to perform a general positioning movement which enables the focusing head 16 to work in different planes. The travel of the beam 10 along the axis Z is normally between 100 and 300 mm and is brought about by a first drive member (not shown) which is independent of the carriage 14. Thus, the mass of the carriage 14 for the focusing head 16 is less than in conventional machine tools in which the general positioning travel of the head 16 along the axis Z is brought about by a drive member carried by the carriage 14. If other conditions remain the same, this increases the maximum acceleration which can be achieved by the carriage-head unit 14-16 in the plane X-Y.

The focusing head 16 can also perform a fine adjustment movement along the axis Z, relative to the carriage 14. This adjustment movement has a maximum range of the order of a few millimeters and serves to focus the laser beam precisely on the workpiece. Since the range of the fine adjustment movement is of the order of a few hundredths of the maximum range of the general positioning movement, the drive member and the guides necessary to bring about the fine adjustment travel of the focusing head 16 will be extremely light.

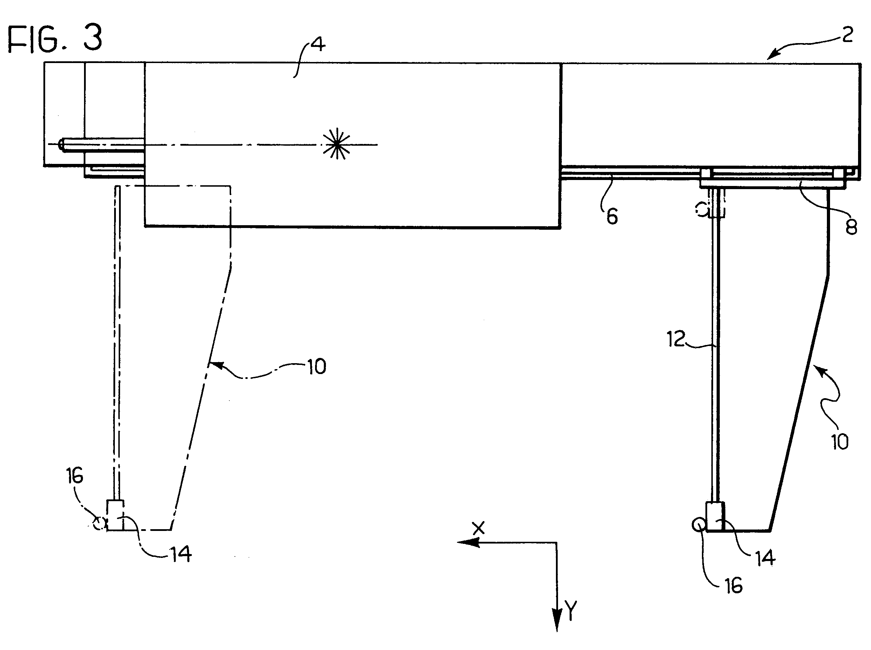

In order to withstand rapid accelerations in the plane X-Y, the cross-section of the beam having the greatest moment of inertia with respect to a baricentric axis is disposed in a horizontal plane (see Figure 3 in particular).

Given that the beam 10 is cantilevered, its width along the axis X preferably decreases towards the free end of the beam (again see Figure 3) so that the stiffness/weight ratio of the beam is optimised.

In order for the focusing head 16 to have maximum penetrability, it must always project below the lower level of the beam 10 by a constant distance H (Figures 1 and 2) which is no less than the total general positioning travel.

## Claims

1. A laser machine tool including a base structure (2) carrying a first horizontal guide (6) on which a slide (8) is slidable, the slide (8) carrying a beam (10) which has a second horizontal guide (12) perpendicular to the first (6), in which a laser focusing head (16) mounted on a carriage (14) is movable along the second guide (12) and can be made to travel along a vertical axis (Z) by at least one drive member, characterised in that at least one of the drive members which bring about the vertical travel of the head (16) is independent of the movement of the head (16) along the beam (10).

2. A laser machine tool according to Claim 1, characterised in that the slide (8) carries a vertical guide (18) along which the beam (10) carrying the focusing head (16) is movable, and in that the vertical travel (Z) of the focusing head (16) is composed of a general positioning movement of the beam (10) along the vertical guide (18) brought about by a first drive member which is associated with the beam and hence does not form part of the carriage (14) of the head (16), and by a fine adjustment movement of the focusing head (16) relative to the beam (10) brought about by a second drive member associated with the head (16), the maximum range of the fine adjustment movement being less than the maximum range of the general positioning movement by at least one order of magnitude.

3. A laser machine tool according to Claim 2, characterised in that the focusing head (16) always projects below the lower level of the beam (10) by a constant distance no less than the total general vertical positioning travel of the beam (10).

4. A laser machine tool according to Claim 2, characterised in that the beam (10) is cantilevered on a carriage (8) which is movable along the guides (6).

5. A laser machine tool according to Claim 2, characterised in that the cross-section of the beam (10) having the greatest moment of inertia with respect to a baricentric axis is disposed in a horizontal plane.

6. A laser machine according to Claim 4 or Claim 5, characterized in that the width of the profile of the beam (10) in a horizontal plane decreases towards the free end of the beam.
